# FASCICULE DE BREVET EUROPEEN

(11) **EP 2 299 667 B1**
(45) Date de publication et mention de la délivrance du brevet: **06.01.2016**
(21) Numéro de dépôt: 10176779.6
(22) Date de dépôt: 15.09.2010
(51) Int. Cl.: H04M 1/66, H04M 1/725, G06F 17/30, G06Q 50/00, H04M 3/42

(54) **Controle parental de l'utilisation d'un terminal mobile**
Kindersicherung für ein mobiles Endgerät
Parental control of a mobile terminal

(30) Priorité: 18.09.2009 FR 0956418
(43) Date de publication de la demande: 23.03.2011
(73) Titulaire: ALCATEL LUCENT, 92100 Boulogne-Billancourt (FR)
(72) Inventeur: Soudani, Mounir, 91620, NOZAY (FR); Houllier, Jean-Roch, 91240, Saint-Michel sur Orge (FR)
(74) Mandataire: Sciaux, Edmond

(56) Documents cités:
- GB-A- 2 380 361
- US-A1- 2006 003 754
- US-A1- 2008 246 605

## Description

La présente invention concerne un contrôle parental de l'utilisation d'un terminal mobile.

En particulier, l'invention concerne un contrôle parental relatif à un terminal mobile de télécommunication, utilisé par exemple par un enfant dont les parents veulent exercer un contrôle sur ladite utilisation, notamment relativement à l'accès aux appels téléphoniques mais également aux autres services disponibles au moyen du terminal mobile.

Il existe des services de contrôle parental permettant aux parents de configurer des règles de contrôle sur l'utilisation du terminal de leur enfant, lesdites règles étant appliquées afin d'autoriser ou de refuser l'accès à un service demandé par l'enfant au moyen de son terminal. Par exemple, ces règles définissent une liste noire de numéros d'appels ou de services multimédias interdits, et des plages horaires autorisant l'accès à différents services de communication, tels que des appels vocaux ou des transmissions de messages courts ou multimédia. Ces règles peuvent ainsi définir des limites sur la durée d'utilisation du terminal ou sur la quantité de données utilisées, ou encore des limites sur un coût maximal engendré par l'utilisation du terminal. En outre, le système de contrôle parental peut définir des numéros d'exception qui ne peuvent être bloqués, tels que les numéros d'appel d'urgence.

US20080246605 décrit un procédé de contrôle parental de l'art antérieur.

En outre, le système de contrôle parental permet de notifier aux parents certaines informations relatives à l'application des règles de contrôle, notamment en transmettant :
- des notifications d'alerte lorsqu'une limite d'utilisation est proche ;
- des notifications d'épuisement d'un crédit d'utilisation ;
- des notifications de refus d'accès à un service demandé par l'enfant au moyen de son terminal.

Le système de contrôle parental a un caractère unidirectionnel puisque les parents définissent des règles de contrôle sur l'utilisation du terminal de leur enfant et ce dernier respecte ces règles mais ne peut pas donner un quelconque retour sur ses impressions sur l'application des règles à travers le système de contrôle parental GB2380361 décrit un système de vote électronique permettant à des utilisateurs de terminaux mobiles d'exprimer un vote par message court.

Un objectif de l'invention est de remédier aux inconvénients précédents en proposant notamment un procédé de contrôle parental selon lequel l'enfant peut agir et donner des impressions sur l'application des règles de contrôle sur l'utilisation du terminal mobile.

Pour atteindre cet objectif, l'invention concerne un procédé de contrôle parental pour contrôler l'utilisation d'un terminal mobile tel que défini dans la revendication indépendante 1.

Avantageusement, l'invention permet à l'utilisateur du terminal mobile d'avoir un rôle actif dans le système de contrôle parental. En outre, l'invention offre au système de contrôle parental un caractère bidirectionnel selon lequel à la fois les parents et l'enfant peuvent agir sur le système contrôle parental.

Le système de contrôle parental permet ainsi de récupérer les impressions de l'utilisateur du terminal mobile vis à vis d'une règle de contrôle, par exemple peu de temps après l'application de la règle de contrôle.

Selon d'autres caractéristiques de l'invention, le message peut contenir en outre un identificateur de la règle de contrôle pour laquelle l'utilisateur a sélectionné un type d'impression, des impressions ou des suggestions relatives à une règle de contrôle saisies par l'utilisateur du terminal mobile, ou encore une information de géolocalisation relative à la position du terminal mobile.

Selon une autre caractéristique de l'invention, le serveur peut déterminer une règle de contrôle associée au type d'impression en fonction de la date de réception du message, et en outre en fonction d'une information de géolocalisation relative à la position du terminal mobile contenue dans le message reçu.

Selon une autre caractéristique de l'invention, le serveur peut associer une zone géographique d'utilisation à la règle de contrôle déterminée, au type d'impression et à la date de réception du message, en fonction de l'information de géolocalisation contenue dans le message reçu par le serveur.

De telles informations permettent d'améliorer d'éventuelles campagnes commerciales ciblées sur des moyens de communication pris en charge par le système de contrôle parental.

Les informations de localisation permettent en outre d'enrichir les règles de contrôle, par exemple pour autoriser ou refuser l'utilisation d'un service en fonction du lieu où se trouve l'utilisateur. Les informations de localisation permettent en outre de créer des zones d'utilisation associées à des règles de contrôle, et d'enrichir les règles de contrôle ayant des dimensions de type quantitatif et temporel.

Selon une autre caractéristique de l'invention, le serveur peut transmettre un message de notification à un terminal d'un tuteur de l'utilisateur du terminal mobile, après réception du message transmis depuis le terminal mobile, le message de notification comprenant une indication selon laquelle l'utilisateur du terminal mobile a soumis des impressions sur une règle de contrôle.

L'invention concerne également un terminal mobile tel que défini dans la revendication indépendante 7.

L'invention concerne également un serveur tel que défini dans la revendication indépendante 8.

L'invention se rapporte encore à un programme d'ordinateur apte à être mis en oeuvre dans un terminal mobile, ledit programme comprenant des instructions qui, lorsque le programme est exécuté dans ledit terminal mobile, réalisent les étapes selon le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un système de communication selon une réalisation de l'invention, et
- la figure 2 est un algorithme d'un procédé de contrôle parental selon une réalisation de l'invention.

L'invention est relative à un contrôle parental de l'utilisation d'un terminal mobile, l'utilisateur pouvant être un enfant ou une personne sous tutelle. En particulier, le contrôle s'effectue à partir du numéro d'appel MSISDN ("Mobile Subscriber Integrated Services Digital Network Number" en anglais) correspondant au terminal mobile. Ainsi, si l'utilisateur change de téléphone et qu'il garde le même numéro de téléphone, le contrôle parental continue à s'appliquer.

Il est considéré que le contrôle parental lié au terminal mobile est exercé par un tuteur, qui peut être un parent de l'utilisateur du terminal mobile. Par exemple, l'utilisateur du terminal mobile est un enfant et le tuteur est l'ensemble des deux parents de l'enfant.

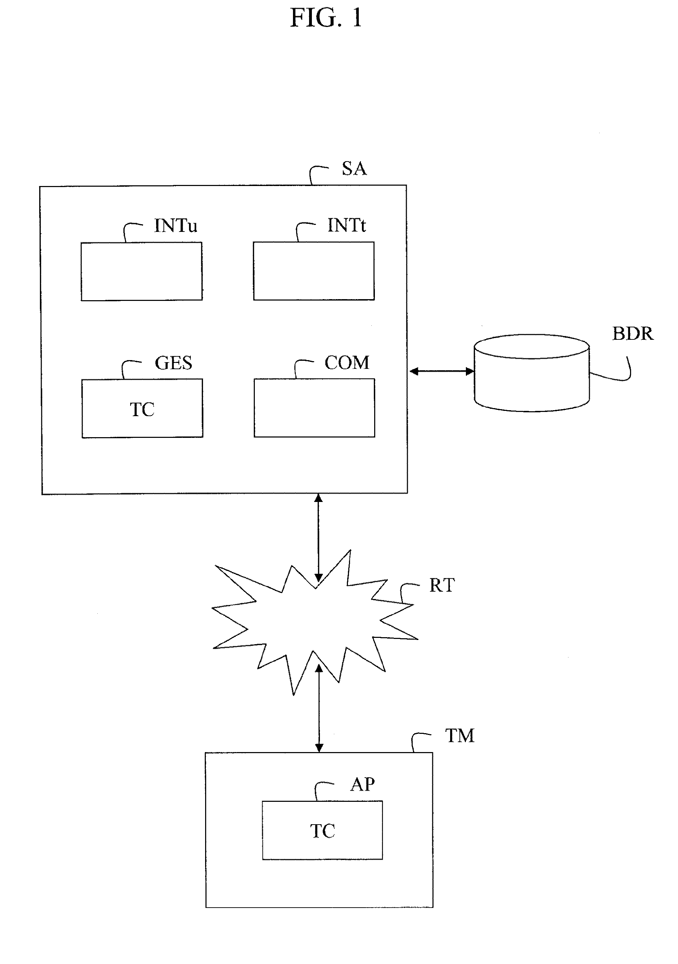

En référence à la figure 1, un système de communication comprend au moins un terminal mobile TM et un serveur d'application SA, aptes à communiquer entre eux à travers un réseau de télécommunications RT.

Dans la suite de la description, le terme module peut désigner un dispositif, un logiciel ou une combinaison de matériel informatique et de logiciel, configuré pour exécuter au moins une tâche particulière.

Le terminal mobile TM est apte à établir une communication dans le réseau de télécommunications RT, par exemple avec un autre terminal d'utilisateur, ou avec un serveur de service.

Selon un exemple, un terminal mobile TM est un terminal de radiocommunications cellulaire mobile, relié par un canal de radiocommunication au réseau d'accès RA comprenant le réseau fixe d'un réseau de radiocommunications, par exemple de type GSM ("Global System for Mobile communications" en anglais) ou UMTS ("Universal Mobile Telecommunications System" en anglais).

Selon un autre exemple, un terminal mobile TM comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anlais) ou conforme à l'une des normes 802.1x, ou de moyenne portée selon le protocole WIMAX ("World wide Interoperability Microwave Access" en anglais).

Selon une réalisation de l'invention, une application AP est implémentée dans le terminal mobile TM, par exemple sous forme de programme d'ordinateur. L'application est dédiée au contrôle parental et a pour fonctionnalité de transmettre au serveur d'application SA un message relatif à des types d'impression de l'utilisateur par rapport aux règles de contrôle.

Dans une réalisation, l'application AP a en mémoire une table TC de correspondance entre un ensemble de types d'impression prédéfinis et un ensemble de numéros d'appel. L'application présente une interface graphique permettant à l'utilisateur de sélectionner un type d'impression parmi un ensemble de types d'impression, un type d'impression pouvant être représenté sous forme textuelle, ou sous forme de figures par exemple de type "smiley". Par exemple, l'utilisateur peut avoir le choix entre :
- une figure évoquant une bonne impression et associée à un numéro d'appel "0601", la figure étant par exemple un "smiley" avec un visage souriant,
- une figure évoquant une impression neutre et associée à un numéro d'appel "0602", la figure étant par exemple un "smiley" avec un visage confus, et
- une figure évoquant une mauvaise impression et associée à un numéro d'appel "0603", la figure étant par exemple un "smiley" avec un visage triste.

Le type d'impression sélectionné par l'utilisateur peut être associé à une règle de contrôle ou à une combinaison de règles de contrôle.

Lorsque l'utilisateur sélectionne un type d'impression, un message est transmis depuis le terminal mobile vers le serveur d'application, via le numéro d'appel associé au type d'impression.

Dans une autre réalisation, l'application présente une interface graphique permettant à l'utilisateur de saisir en outre ses impressions, par exemple textuellement ou vocalement. Les impressions saisies par l'utilisateur peuvent être associées à une règle de contrôle ou à une combinaison de règles de contrôle.

Par exemple, l'application implémentée dans le terminal mobile peut être configurée au moyen de renseignements fournis par l'opérateur gérant le serveur d'application SA, en relation notamment avec les numéros d'appel associés aux types d'impression, et peut être mise à jour ou téléchargée depuis un serveur tel que le serveur d'application SA.

Le serveur d'application SA comprend une interface d'utilisateur INTu, une interface de tuteur INTt, un module de communication COM, et un module de gestion GES. Le serveur d'application SA est lié à une base de données de règles BDR qui est intégrée dans ce dernier ou incorporée dans un serveur de gestion de base de données relié au serveur SA par une liaison locale ou distante.

La base de données de règles BDR comprend des informations relatives à l'invention, telles que des règles de contrôle sur l'utilisation du terminal mobile.

Selon des exemples de réalisation, des règles de contrôle peuvent être configurées pour définir :
- une activité réduite, par exemple l'enfant n'est pas autorisé à appeler pendant les heures d'école ;
- un service interdit, par exemple des numéros de téléphone interdits ;
- une limitation d'utilisation basée sur au moins une unité de service, par exemple un temps de communication, un nombre de messages courts ou multimédia, un volume de données ;
- une limitation d'utilisation basée sur un coût, par exemple en Euro ;
- un service toujours autorisé, par exemple des numéros de téléphone d'urgence.

Les règles de contrôle peuvent être préalablement configurées par les parents pour le terminal de leur enfant, par exemple au moyen d'une interface web. Lorsque l'accès à un service est demandé par l'utilisateur du terminal mobile TM, les règles de contrôle sont appliquées afin d'autoriser ou de refuser l'accès audit service, par exemple au moyen d'un module de contrôle du serveur d'application en relation avec un serveur du réseau de télécommunications délivrant le service.

L'accès à un service peut être autorisé ou refusé en outre en fonction d'une combinaison de règles de contrôle. Par exemple, pendant une plage horaire donnée, certains numéros de téléphones sont interdits, et ces derniers peuvent être autorisés pendant une autre plage horaire donnée. Par souci de clarté, une combinaison de règles de contrôle sera assimilée à une règle de contrôle ayant des critères plus complexes.

En outre, il peut exister des règles prioritaires sur d'autres règles. Par exemple, un appel peut être refusé avant tout parce que l'appel correspond à un numéro de téléphone interdit, alors que l'appel a été effectué pendant une plage horaire non autorisée.

Le serveur d'application SA reçoit, via le module de communication COM, des messages transmis depuis le terminal mobile TM. Le module de gestion GES mémorise par exemple chaque message en correspondance avec un identificateur du couple composé de l'utilisateur et du tuteur, tel qu'un couple enfant-parent.

Dans une réalisation, le module de gestion GES gère une table TC de correspondance entre un ensemble de types d'impression prédéfinis et un ensemble de numéros d'appel, qui est similaire à celle gérée par l'application AP dans le terminal mobile TM. Lorsqu'un message est reçu via un numéro d'appel donné, le module de gestion en déduit les types d'impressions correspondants.

L'interface d'utilisateur INTu offre un espace dans lequel l'utilisateur du terminal mobile peut soumettre des idées ou suggestions, par exemple par rapport à une règle de contrôle donnée ou de manière ouverte. Le module d'interface est par exemple une interface web à laquelle l'utilisateur du terminal mobile peut se connecter, à l'aide d'un identificateur.

Au moyen de l'interface d'utilisateur INTu, l'utilisateur peut en outre vérifier le contenu des types d'impression qui ont été précédemment transmis.

L'interface de tuteur INTt offre un espace dans lequel le tuteur peut accéder à des idées, des impressions et des suggestions soumises par l'utilisateur du terminal mobile.

Optionnellement, l'interface de tuteur INTT transmet automatiquement un message de notification au tuteur, via le module de communication COM, lorsque l'utilisateur du terminal mobile a soumis un type d'impression relatif à une règle de contrôle. Le message de notification est par exemple un message court SMS ("Short Message Service" en anglais) transmis à un terminal mobile du tuteur.

Le module de gestion GES détermine en outre une zone d'utilisation en relation avec les règles de contrôle et les types d'impression soumis par l'utilisateur.

Les règles de contrôle peuvent être en outre configurées en fonction du lieu où se trouve l'utilisateur du terminal mobile. L'utilisateur peut être ainsi autorisé à accéder à différents services de communication selon le lieu où il se trouve.

Par ailleurs, le message transmis au serveur d'application SA peut contenir en outre une information de géolocalisation. Le module de gestion GES mémorise alors les types d'impression de l'utilisateur en correspondance avec l'information de géolocalisation.

En collaboration avec le module de gestion GES, l'interface de tuteur INTt est apte à produire et afficher une carte sur laquelle sont représentées des zones associées à des règles de contrôle ainsi qu'aux types d'impression de l'utilisateur relatifs à ces règles.

Pour un meilleur suivi du contrôle parental par le tuteur, le serveur d'application SA est apte à synthétiser les types d'impression et les suggestions soumises par l'utilisateur du terminal mobile par exemple en les ordonnant de manière temporelle et/ou spatiales.

Par ailleurs, certaines impressions et suggestions peuvent être extraites et ajoutées à d'autres impressions et suggestions d'autres utilisateurs, de manière anonyme, afin que cet ensemble d'impressions et de suggestions puissent être analysé et que l'opérateur puisse appréhender l'application et la dynamique des diverses règles de contrôle relatives au contrôle parental.

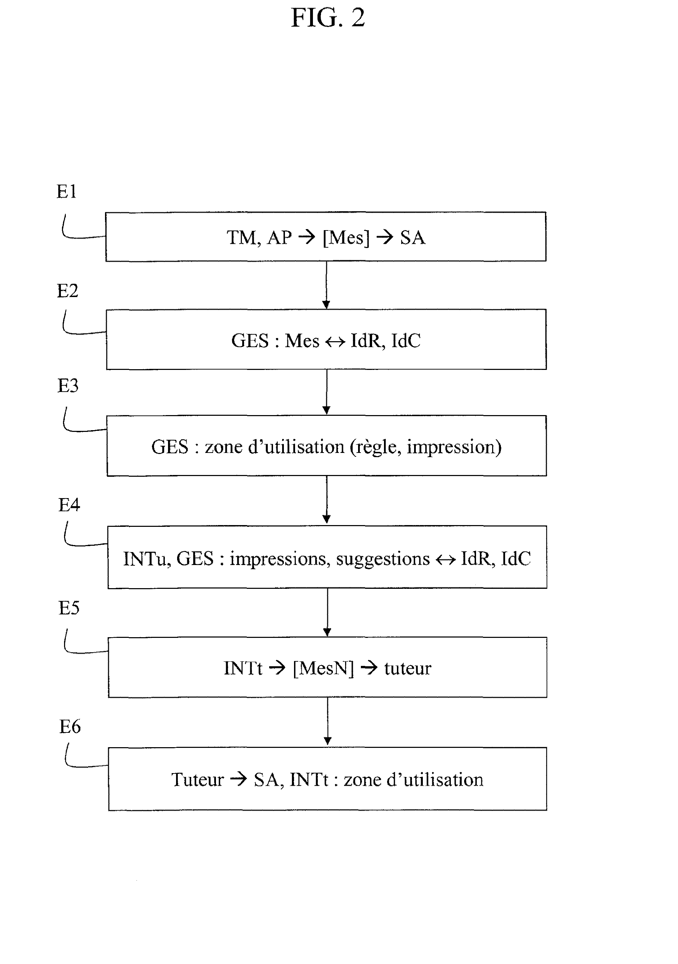

En référence à la figure 2, un procédé de contrôle parental selon une réalisation de l'invention comprend des étapes E1 à E6 exécutées dans le système de communication.

Initialement, il est considéré qu'un tuteur, tel qu'un parent, a souscrit à un service de contrôle parental vis-à-vis d'un utilisateur d'un terminal mobile, tel qu'un enfant. Le serveur d'application mémorise un identificateur IdC du couple composé de l'utilisateur et du tuteur, associé à un identificateur du terminal mobile, tel que le numéro d'appel du terminal mobile.

Il est considéré en outre qu'au moins une règle de contrôle est appliquée par rapport à l'utilisation d'un service de communication requis par l'utilisateur du terminal mobile.

A l'étape E1, l'utilisateur du terminal mobile TM sélectionne un type d'impression parmi un ensemble de type d'impression par l'intermédiaire d'une interface graphique gérée par l'application AP, par exemple en réaction à l'application de la règle de contrôle. L'application AP détermine dans la table de correspondance TC un numéro d'appel associé au type d'impression.

Optionnellement, le type d'impression sélectionné par l'utilisateur est associé à une règle de contrôle ou à une combinaison de règles de contrôle.

Optionnellement, l'utilisateur est invité à saisir des impressions ou des suggestions, par exemple de modification, sur une règle de contrôle, par exemple vocalement ou textuellement, en plus de la sélection du type d'impression.

L'application AP produit un message Mes contenant optionnellement une information de géolocalisation relative à la position du terminal mobile, un identificateur IdR d'une règle de contrôle, et les impressions ou suggestions saisies par l'utilisateur.

L'application AP transmet le message Mes au serveur d'application SA, via le numéro d'appel associé au type d'impression sélectionné.

A l'étape E2, le serveur d'application SA reçoit, via le module de communication COM, le message Mes transmis depuis le terminal mobile TM et mémorise le message reçu en correspondance avec l'identificateur IdC du couple composé de l'utilisateur et du tuteur, au moyen du numéro d'appel du terminal mobile.

Le module de gestion GES détermine dans la table de correspondance TC un type d'impression associé au numéro d'appel via lequel le message Mes a été reçu.

Le module de gestion GES identifie une règle de contrôle associée au type d'impression déterminé relatif au message Mes, et mémorise le type d'impression en correspondance avec un identificateur IdR de la règle de contrôle.

Par exemple, le module de gestion GES identifie la règle de contrôle en fonction de la date de réception du message Mes, et optionnellement en fonction de l'information de géolocalisation contenue dans le message Mes. Le module de gestion effectue une corrélation entre les informations liées au message Mes, telles que la date et l'information de géolocalisation, et le contenu des règles de contrôle. La date peut avoir une précision du type "Année, Mois, Jour, Heure" ou encore "Année, Mois, Jour, Heure, Minute, Seconde".

Par exemple, le module de gestion GES consulte un historique d'application de règles de contrôle et identifie la dernière règle de contrôle ayant été appliquée. Une telle identification de règle est par exemple validée si le message Mes a été reçu pendant un intervalle de temps donné à partir de la date d'application de la dernière règle.

A titre d'exemple, à une date donnée et dans une zone donnée, l'accès à un service requis par le terminal mobile a été refusé à cause d'une règle de contrôle, appelée Règle1, autorisant l'accès à un nombre réduit de service lorsque le terminal mobile est dans ladite zone.

Si le message est reçu très peu de temps après l'application de la règle contrôle, par exemple cinq minutes plus tard, le module de gestion identifie que la dernière règle de contrôle appliquée est la règle Règle1.

Si le message est reçu quelque temps après l'application de la règle contrôle, par exemple une heure plus tard, le module de gestion identifie la règle Règle1 en fonction de l'information de géolocalisation contenue dans le message Mes, qui confirme une position du terminal mobile proche ou incluse dans ladite zone lorsque le message Mes a été envoyé.

Si le message est reçu longtemps après l'application de la règle contrôle, par exemple plusieurs heures plus tard, le module de gestion n'identifie pas de règle.

Selon un autre exemple, le message Mes contient déjà l'identificateur IdR de la règle de contrôle, et le module de gestion identifie directement la règle de contrôle.

Selon encore un autre exemple, le module de gestion exécute une analyse de mots-clés ou analyse sémantique sur le contenu du message Mes, dans le cas où l'utilisateur a saisi des impressions ou des suggestions pour en déduire la règle de contrôle concernée.

Ainsi, le module de gestion GES mémorise un type d'impression, et le cas échéant des impressions saisies par l'utilisateur, en correspondance avec l'identificateur IdR de la règle de contrôle identifiée. Le module de gestion GES peut mémoriser les impressions en correspondance également avec la date à laquelle le message a été reçu, et le cas échéant en outre avec une information de géolocalisation relative à la position du terminal mobile, qui est déjà contenue dans le message Mes.

A l'étape E3 optionnelle, le module de gestion GES détermine une zone géographique d'utilisation et associe cette dernière à la règle de contrôle identifiée et au type d'impression soumis par l'utilisateur, ainsi qu'à la date de réception du message Mes, notamment en fonction de l'information de géolocalisation contenue dans le message Mes.

Par exemple, le module de gestion GES produit une carte sur laquelle sont représentées plusieurs zones, chacune associée à au moins une règle qui est elle-même associée à au moins un ensemble de types d'impression et éventuellement à un ensemble d'impressions saisies précédemment par l'utilisateur.

A l'étape E4, l'utilisateur du terminal mobile se connecte à l'interface d'utilisateur INTu du serveur d'application SA, afin de vérifier le ou les types d'impression qui ont été précédemment transmis, et éventuellement les impressions saisies précédemment par l'utilisateur.

L'utilisateur peut en outre soumettre d'autres impressions ou des suggestions, par exemple par rapport à une règle de contrôle donnée ou de manière plus générale sur le contrôle parental.

Les suggestions soumises par l'utilisateur sont par exemple relatives à certains éléments définis dans une règle de contrôle, tels qu'un nombre maximal de messages à envoyer, une durée totale des appels, un volume maximal de données transférées, des plages horaires pour l'utilisation d'un service de communication et aussi des zones géographiques pour l'utilisation d'un service de communication.

Par exemple, l'utilisateur recherche et trouve le type d'impression, et éventuellement les impressions saisies, qui ont été précédemment soumis par l'intermédiaire du terminal mobile et qui sont associés à une règle de contrôle ainsi qu'à une zone géographique représentée sur une carte affichée par le module de gestion. L'utilisateur a alors la possibilité de corriger ou de compléter ses impressions sur la règle de contrôle, et peut éventuellement ajouter des suggestions pour modifier la règle de contrôle.

Ainsi, le module de gestion GES mémorise les impressions ou suggestions soumises par l'utilisateur en correspondance avec l'identificateur IdR de la règle concernée, éventuellement en association avec la date courante, et avec l'identificateur IdC du couple composé de l'utilisateur et du tuteur.

A l'étape E5 optionnelle, l'interface de tuteur INTt transmet automatiquement un message de notification MesN à un terminal du tuteur, via le module de communication COM, après qu'un message Mes a été reçu depuis le terminal mobile de l'utilisateur. Par exemple, le message de notification MesN comprend une indication selon laquelle l'utilisateur du terminal mobile a soumis des impressions sur une règle de contrôle.

A l'étape E6, le tuteur se connecte au serveur d'application SA, via l'interface de tuteur INTt. Cette interface offre un espace dans lequel le tuteur peut accéder aux idées, impressions et suggestions soumises par l'utilisateur du terminal mobile. Par exemple, le tuteur est identifié à l'aide d'un identificateur permettant l'accès aux informations liées à l'identificateur IdC du couple composé de l'utilisateur et du tuteur.

En particulier, l'interface de tuteur INTt informe le tuteur que l'utilisateur du terminal mobile a soumis des impressions sur une règle de contrôle, ou présente directement en partie les impressions contenues dans le message Mes reçu par le serveur d'application SA.

L'interface de tuteur INTt affiche une carte sur laquelle sont représentées des zones associées à des règles de contrôle ainsi qu'aux impressions de l'utilisateur sur ces règles.

Optionnellement, le module de gestion GES génère une suggestion de modification de règle de contrôle et la propose au tuteur via l'interface de tuteur INTt.

L'invention décrite ici concerne un procédé et un terminal mobile pour contrôler l'utilisation du terminal mobile. Selon une implémentation de l'invention, les étapes du procédé de l'invention sont déterminées par les instructions d'un programme d'ordinateur incorporé dans un terminal, tel que le terminal mobile TM. Le programme comporte des instructions de programme, qui lorsque ledit programme est chargé et exécuté dans le terminal mobile, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé de contrôle parental pour contrôler l'utilisation d'un terminal mobile (TM) en fonction de règles de contrôle sur l'utilisation dudit terminal mobile pour autoriser ou refuser l'accès à un service requis par le terminal mobile à travers un réseau de télécommunications (RT), comprenant les étapes suivantes dans le terminal mobile :
suite à une sélection par l'utilisateur d'un type d'impression relatif à au moins une règle de contrôle parmi un ensemble de type d'impression par l'intermédiaire d'une interface gérée par le terminal mobile, déterminer (E1) un numéro d'appel associé au type d'impression dans une table de correspondance comprenant des numéros d'appel associés respectivement à des types d'impression, le type d'impression étant sous forme textuelle ou sous forme d'une figure et évoquant une impression parmi une bonne impression, une mauvaise impression et une impression neutre en réaction à l'application de ladite au moins une règle de contrôle, et
transmettre (E1) un message (Mes) à un serveur (SA) via le numéro d'appel déterminé, le message (Mes) contenant un identificateur (IdR) de la règle de contrôle pour laquelle l'utilisateur a sélectionné un type d'impression, afin que le serveur détermine un type d'impression relatif à ladite au moins une règle de contrôle en fonction du numéro d'appel via lequel le message (Mes) a été reçu.

2. Procédé conforme à la revendication 1, selon lequel le message (Mes) contient en outre des impressions ou des suggestions relatives à une règle de contrôle saisies par l'utilisateur du terminal mobile.

3. Procédé conforme à l'une des revendications 1 à 2, selon lequel le serveur (SA) détermine une règle de contrôle associée au type d'impression en fonction de la date de réception du message (Mes).

4. Procédé conforme à la revendication 3 selon lequel le message (Mes) contient une information de géolocalisation relative à la position du terminal mobile, et le serveur (SA) détermine une règle de contrôle associée au type d'impression en outre en fonction de l'information de géolocalisation relative à la position du terminal mobile contenue dans le message reçu (Mes).

5. Procédé conforme à la revendication 4, selon lequel le serveur associe une zone géographique d'utilisation à la règle de contrôle déterminée, au type d'impression et à la date de réception du message (Mes), en fonction de l'information de géolocalisation contenue dans le message (Mes).

6. Procédé conforme à l'une des revendications 1 à 5, selon lequel le serveur (SA) transmet un message de notification (MesN) à un terminal d'un tuteur de l'utilisateur du terminal mobile, après réception du message (Mes) transmis depuis le terminal mobile (TM), le message de notification comprenant une indication selon laquelle l'utilisateur du terminal mobile a soumis des impressions sur une règle de contrôle.

7. Terminal mobile (TM) pour le contrôle parental de l'utilisation dudit terminal mobile (TM) en fonction de règles de contrôle sur l'utilisation dudit terminal mobile pour autoriser ou refuser l'accès à un service requis par le terminal mobile à travers un réseau de télécommunications (RT), le terminal mobile comprenant :
des moyens (AP) pour déterminer un numéro d'appel associé à un type d'impression dans une table de correspondance comprenant des numéros d'appel associés respectivement à des types d'impression, suite à une sélection par l'utilisateur du type d'impression relatif à au moins une règle de contrôle parmi un ensemble de type d'impression par l'intermédiaire d'une interface gérée par le terminal mobile , le type d'impression étant sous forme textuelle ou sous forme d'une figure et évoquant une impression parmi une bonne impression, une mauvaise impression et une impression neutre en réaction à l'application de ladite au moins une règle de contrôle, et
des moyens (AP) pour transmettre un message (Mes) depuis le terminal mobile (TM) à un serveur (SA) via le numéro d'appel déterminé, le message (Mes) contenant un identificateur (IdR) de la règle de contrôle pour laquelle l'utilisateur a sélectionné un type d'impression, afin que le serveur détermine un type d'impression relatif à ladite au moins une règle de contrôle en fonction du numéro d'appel via lequel le message (Mes) a été reçu.

8. Serveur (SA) pour le contrôle parental de l'utilisation d'un terminal mobile (TM) en fonction de règles de contrôle sur l'utilisation dudit terminal mobile pour autoriser ou refuser l'accès à un service requis par le terminal mobile à travers un réseau de télécommunications (RT), le serveur comprenant :
des moyens (COM) pour recevoir un message (Mes) transmis depuis le terminal mobile (TM) via un numéro d'appel qui a été déterminé dans le terminal mobile dans une table de correspondance comprenant des numéros d'appel associés respectivement à des types d'impression, suite à une sélection par l'utilisateur d'un type d'impression relatif à au moins une règle de contrôle parmi un ensemble de type d'impression par l'intermédiaire d'une interface gérée par le terminal mobile , le type d'impression étant sous forme textuelle ou sous forme d'une figure et évoquant une impression parmi une bonne impression, une mauvaise impression et une impression neutre en réaction à l'application de ladite au moins une règle de contrôle, le message (Mes) contenant un identificateur (IdR) de la règle de contrôle pour laquelle l'utilisateur a sélectionné un type d'impression et
des moyens (AP) pour déterminer un type d'impression relatif à ladite au moins une règle de contrôle en fonction du numéro d'appel via lequel le message (Mes) a été reçu.

9. Serveur (SA) conforme à la revendication 8, comprenant en outre des moyens (GES) pour déterminer une règle de contrôle associée au type d'impression en fonction de la date de réception du message (Mes) et en fonction d'une information de géolocalisation relative à la position du terminal mobile contenue dans le message reçu (Mes).

10. Serveur (SA) conforme à la revendication 9, comprenant en outre des moyens (GES) pour associer une zone géographique d'utilisation à la règle de contrôle déterminée, au type d'impression et à la date de réception du message (Mes), en fonction de l'information de géolocalisation contenue dans le message (Mes).

11. Programme d'ordinateur de contrôle parental apte à être mis en oeuvre dans un terminal mobile (TM) pour contrôler l'utilisation du terminal mobile en fonction de règles de contrôle sur l'utilisation dudit terminal mobile pour autoriser ou refuser l'accès à un service requis par le terminal mobile à travers un réseau de télécommunications (RT), ledit programme comprenant des instructions qui, lorsque le programme est chargé et exécuté dans ledit terminal mobile, réalisent les étapes suivantes :
suite à une sélection par l'utilisateur d'un type d'impression relatif au moins une règle de contrôle parmi un ensemble de type d'impression par l'intermédiaire d'une interface gérée par le terminal mobile, déterminer (E1) un numéro d'appel associé au type d'impression dans une table de correspondance comprenant des numéros d'appel associés respectivement à des types d'impression, le type d'impression étant sous forme textuelle ou sous forme d'une figure et évoquant une impression parmi une bonne impression, une mauvaise impression et une impression neutre en réaction à l'application de ladite au moins une règle de contrôle,
transmettre (E1) un message (Mes) à un serveur (SA) via le numéro d'appel déterminé, le message (Mes) contient un identificateur (IdR) de la règle de contrôle pour laquelle l'utilisateur a sélectionné un type d'impression, afin que le serveur (SA) détermine un type d'impression relatif à ladite au moins une règle de contrôle en fonction du numéro d'appel via lequel le message (Mes) a été reçu.

## Patentansprüche

1. Verfahren zur Elternkontrolle zum Kontrollieren der Nutzung eines mobilen Endgeräts (TM) in Abhängigkeit von Nutzungskontrollregeln des besagten mobilen Endgeräts, um den Zugriff auf einen Dienst, der vom mobilen Endgerät über ein Telekommunikationsnetz (RT) gefordert wird, zu erlauben oder zu verweigern, folgende Schritte im mobilen Endgerät umfassend:
nach Auswahl einer Eindrucksart durch den Benutzer bezogen auf mindestens eine Kontrollregel aus einer Gruppe von Eindrucksarten mittels einer Schnittstelle, die vom mobilen Endgerät verwaltet wird, Bestimmen (E1) einer Rufnummer, die der Eindrucksart in einer Entsprechungstabelle zugeordnet ist, die Rufnummern umfasst, die jeweils Eindrucksarten zugeordnet sind, wobei die Eindrucksart in Textform oder in Figurform vorliegt und einen Eindruck aus gutem Eindruck, schlechtem Eindruck und neutralem Eindruck in Reaktion auf die Anwendung der besagten mindestens einen Kontrollregel erweckt, und
Übertragen (E1) einer Nachricht (Mes) an einen Server (SA) über die bestimmte Rufnummer, wobei die Nachricht (Mes) einen Identifikator (IdR) der Kontrollregel enthält, für die der Benutzer eine Eindrucksart gewählt hat, damit der Server eine Eindrucksart bezogen auf die besagte mindestens eine Kontrollregel in Abhängigkeit von der Rufnummer bestimmt, über welche die Nachricht (Mes) empfangen wurde.

2. Verfahren nach Anspruch 1, wobei die Nachricht (Mes) weiterhin Eindrücke oder Vorschläge bezogen auf eine Kontrollregel enthält, die vom Benutzer des mobilen Endgeräts eingegeben werden.

3. Verfahren nach einem der Ansprüche 1 bis 2, wobei der Server (SA) eine Kontrollregel bestimmt, die der Eindrucksart zugeordnet wird, in Abhängigkeit vom Empfangsdatum der Nachricht (Mes).

4. Verfahren nach Anspruch 3, wobei die Nachricht (Mes) eine Ortsbestimmungsinformation bezogen auf die Position des mobilen Endgeräts enthält, und der Server (SA) eine Kontrollregel bestimmt, die der Eindrucksart zugeordnet wird, weiterhin in Abhängigkeit von der Ortsbestimmungsinformation bezogen auf die Position des mobilen Endgeräts, die in der empfangenen Nachricht (Mes) enthalten ist.

5. Verfahren nach Anspruch 4, wobei der Server eine geografische Nutzungszone der bestimmten Kontrollregel, der Eindrucksart und dem Empfangsdatum der Nachricht (Mes) zuordnet, in Abhängigkeit von der Ortsbestimmungsinformation, die in der Nachricht (Mes) enthalten ist.

6. Verfahren nach einem der Ansprüche 1 bis 5, wobei der Server (SA) eine Mitteilungsnachricht (MesN) an ein Endgerät eines Erziehungsberechtigten des Benutzers des mobilen Endgeräts überträgt, nach Empfang der ausgehend vom mobilen Endgerät (TM) übertragenen Nachricht (Mes), wobei die Mitteilungsnachricht einen Hinweis umfasst, wonach der Benutzer des mobilen Endgeräts Eindrücke über eine Kontrollregel eingebracht hat.

7. Mobiles Endgerät (TM) für die Elternkontrolle der Nutzung des besagten mobilen Endgeräts (TM) in Abhängigkeit von Nutzungskontrollregeln des besagten mobilen Endgeräts, um den Zugriff auf einen Dienst, der vom mobilen Endgerät über ein Telekommunikationsnetz (RT) gefordert wird, zu erlauben oder zu verweigern, wobei das mobile Endgerät Folgendes umfasst:
Mittel (AP) zum Bestimmen einer Rufnummer, die einer Eindrucksart in einer Entsprechungstabelle zugeordnet ist, die Rufnummern umfasst, die jeweils Eindrucksarten zugeordnet sind, nach Auswahl einer Eindrucksart durch den Benutzer bezogen auf mindestens eine Kontrollregel aus einer Gruppe von Eindrucksarten mittels einer Schnittstelle, die vom mobilen Endgerät verwaltet wird, wobei die Eindrucksart in Textform oder in Figurform vorliegt und einen Eindruck aus gutem Eindruck, schlechtem Eindruck und neutralem Eindruck in Reaktion auf die Anwendung der besagten mindestens einen Kontrollregel erweckt, und
Mittel (AP) zum Übertragen einer Nachricht (Mes) ausgehend vom mobilen Endgerät (TM) an einen Server (SA) über die bestimmte Rufnummer, wobei die Nachricht (Mes) einen Identifikator (IdR) der Kontrollregel enthält, für die der Benutzer eine Eindrucksart gewählt hat, damit der Server eine Eindrucksart bezogen auf die besagte mindestens eine Kontrollregel in Abhängigkeit von der Rufnummer bestimmt, über welche die Nachricht (Mes) empfangen wurde.

8. Server (SA) für die Elternkontrolle der Nutzung eines mobilen Endgeräts (TM) in Abhängigkeit von Nutzungskontrollregeln des besagten mobilen Endgeräts, um den Zugriff auf einen Dienst, der vom mobilen Endgerät über ein Telekommunikationsnetz (RT) gefordert wird, zu erlauben oder zu verweigern, wobei der Server Folgendes umfasst:
Mittel (COM) zum Empfangen eines Nachricht (Mes), die ausgehend vom mobilen Endgerät (TM) über eine Rufnummer übertragen wird, die im mobilen Endgerät in einer Entsprechungstabelle bestimmt wurde, die Rufnummern umfasst, die jeweils Eindrucksarten zugeordnet sind, nach Auswahl einer Eindrucksart durch den Benutzer bezogen auf mindestens eine Kontrollregel aus einer Gruppe von Eindrucksarten mittels einer Schnittstelle, die vom mobilen Endgerät verwaltet wird, wobei die Eindrucksart in Textform oder in Figurform vorliegt und einen Eindruck aus gutem Eindruck, schlechtem Eindruck und neutralem Eindruck in Reaktion auf die Anwendung der besagten mindestens einen Kontrollregel erweckt, wobei die Nachricht (Mes) einen Identifikator (IdR) der Kontrollregel enthält, für die der Benutzer eine Eindrucksart gewählt hat, und
Mittel (AP) zum Bestimmen einer Eindrucksart bezogen auf die besagte mindestens eine Kontrollregel in Abhängigkeit von der Rufnummer, über welche die Nachricht (Mes) empfangen wurde.

9. Server (SA) nach Anspruch 8, weiterhin umfassend Mittel (GES) zum Bestimmen einer Kontrollregel, die der Eindrucksart zugeordnet wird, in Abhängigkeit vom Empfangsdatum der Nachricht (Mes) und in Abhängigkeit von einer Ortsbestimmungsinformation bezogen auf die Position des mobilen Endgeräts, die in der empfangenen Nachricht (Mes) enthalten ist.

10. Server (SA) nach Anspruch 9, weiterhin umfassend Mittel (GES), um eine geografische Nutzungszone der bestimmten Kontrollregel, der Eindrucksart und dem Empfangsdatum der Nachricht (Mes) zuzuordnen, in Abhängigkeit von der Ortsbestimmungsinformation, die in der Nachricht (Mes) enthalten ist.

11. Computerprogramm zur Elternkontrolle, das geeignet ist, in einem mobilen Endgerät (TM) angewendet zu werden, zum Kontrollieren der Nutzung des mobilen Endgeräts in Abhängigkeit von Nutzungskontrollregeln des besagten mobilen Endgeräts, um den Zugriff auf einen Dienst, der vom mobilen Endgerät über ein Telekommunikationsnetz (RT) gefordert wird, zu erlauben oder zu verweigern, wobei besagtes Programm Befehle umfasst, die, wenn das Programm im besagten mobilen Endgerät geladen und ausgeführt wird, folgende Schritte durchführen:
nach Auswahl einer Eindrucksart durch den Benutzer bezogen auf mindestens eine Kontrollregel aus einer Gruppe von Eindrucksarten mittels einer Schnittstelle, die vom mobilen Endgerät verwaltet wird, das Bestimmen (E1) einer Rufnummer, die der Eindrucksart in einer Entsprechungstabelle zugeordnet ist, die Rufnummern umfasst, die jeweils Eindrucksarten zugeordnet sind, wobei die Eindrucksart in Textform oder in Figurform vorliegt und einen Eindruck aus gutem Eindruck, schlechtem Eindruck und neutralem Eindruck in Reaktion auf die Anwendung der besagten mindestens einen Kontrollregel erweckt,
Übertragen (E1) einer Nachricht (Mes) an einen Server (SA) über die bestimmte Rufnummer, wobei die Nachricht (Mes) einen Identifikator (IdR) der Kontrollregel enthält, für die der Benutzer eine Eindrucksart gewählt hat, damit der Server (SA) eine Eindrucksart bezogen auf die besagte mindestens eine Kontrollregel in Abhängigkeit von der Rufnummer bestimmt, über welche die Nachricht (Mes) empfangen wurde.

## Claims

1. A parental control method for controlling the use of a mobile terminal (TM) based on control rules governing the use of said mobile terminal, to allow or deny access to a service requested by the mobile terminal over a telecommunications network (RT), comprising the following steps within the mobile terminal:
after a selection by the user of a type of impression related to at least one control rule from among a set of types of impressions by means of an interface managed by the mobile terminal, determining (E1) a call number associated with the type of impression within a lookup table comprising call numbers respectively associated with types of impressions the type of impression being in text form or in the form of a figure and evoking an impression chosen from among a good impression, a bad impression, and a neutral impression in reaction to the application of said at least one control rule, and
transmitting (E1) a message (Mes) to a server (SA) via the determined call number, the message (Mes) containing an identifier (IdR) of the control rule for which the user selected a type of impression, so that the server can determine a type of impression related to said at least one control rule based on the call number via which the message (Mes) was received.

2. A method according to claim 1, wherein the message (Mes) further contains impressions or suggestions related to a control rule entered by the user of the mobile terminal.

3. A method according to claim 1 or 2, wherein the server (SA) determines a control rule associated with the type of impression based on the date when the message (Mes) was received.

4. A method according to claim 3 wherein the message (Mes) contains geolocation information related to the position of the mobile terminal, and the server (SA) determines a control rule associated with the type of impression that is also based on the geolocation information related to the mobile terminal position contained within the received message (Mes).

5. A method according to claim 4, wherein the server associates a geographic area of usage with the determined control rule, type of impression, and date when the message (Mes) was received, based on the geolocation information contained within the message (Mes).

6. A method according to one of the claims 1 to 5, wherein the server (SA) transmits a notification message (MesN) to a terminal of a tutor of the user of the mobile terminal, after receiving the message (Mes) transmitted from the mobile terminal (TM), the notification message comprising an indication whereby the user of the mobile terminal has submitted impressions about a control rule.

7. A mobile terminal (TM) for the parental control of the use of said terminal based on control rules for controlling the use of said mobile terminal to allow or deny access to a service requested by the mobile terminal over a telecommunications network (RT), the mobile terminal comprising:
means (AP) for determining a call number associated with a type of impression in a lookup table comprising call numbers respectively associated with types of impressions, following a selection by the user of the type of impression related to at least one control rule from among a set of types of impressions by means of an interface managed by the mobile terminal, the type of impression being in text form or in the form of a figure and evoking an impression chosen from among a good impression, a bad impression, and a neutral impression in reaction to the application of said at least one control rule, and
means (AP) for transmitting a message (Mes) from the mobile terminal (TM) to a server (SA) via the determined call number, the message (Mes) containing an identifier (IdR) of the control rule for which the user selected a type of impression, so that the server can determine a type of impression related to said at least one control rule based on the call number via which the message (Mes) was received.

8. A server (SA) for the parental control of the use of a mobile terminal (TM) based on control rules for controlling the use of said mobile terminal to allow or deny access to a service requested by the mobile terminal over a telecommunications network (RT), the server comprising:
means (COM) for receiving a message (Mes) transmitted from the mobile terminal via the call number that was determined within the mobile terminal in a lookup table comprising call numbers respectively associated with types of impressions, following a selection by the user of a type of impression related to at least one control rule from among a set of types of impressions by means of an interface managed by the mobile terminal, and
means (AP) for determining a type of impression related to said at least one control rule based on the call number via which the message (Mes) was received.

9. A server (SA) according to claim 8, further comprising means (GES) for determining a control rule associated with the type of impression based on the date when the message (Mes) was received and based on a piece of geolocation information related to the position of the mobile terminal contained within the received message (Mes).

10. A server (SA) according to claim 9, further comprising means (GES) for associating a geographic area of usage with the determined control rule, type of impression, and date when the message (Mes) was received, based on the geolocation information contained within the message (Mes).

11. A parental control computer program capable of being implemented in a mobile terminal (TM) for controlling the use of said mobile terminal to allow or deny access to a service requested by the mobile terminal through a telecommunications network (RT), said program comprising instructions that, when the program is loaded and executed in said mobile terminal, carry out the following steps:
after a selection by the user of a type of impression related to at least one control rule from among a set of types of impressions by means of an interface managed by the mobile terminal, determining (E1) a call number associated with the type of impression within a lookup table comprising call numbers respectively associated with types of impressions, the type of impression being in text form or in the form of a figure and evoking an impression chosen from among a good impression, a bad impression, and a neutral impression in reaction to the application of said at least one control rule,
transmitting (E1) a message (Mes) to a server (SA) via the determined call number, the message (Mes) containing an identifier (IdR) of the control rule for which the user selected a type of impression so that the server (SA) can determine a type of impression related to said at least one control rule based on the call number via which the message (Mes) was received.
